(19) Europäisches Patentamt / European Patent Office / Office européen des brevets

(11) **EP 4 450 944 A1**

(12) **DEMANDE DE BREVET EUROPEEN**

(43) Date de publication:
**23.10.2024 Bulletin 2024/43**

(21) Numéro de dépôt: **24168747.4**

(22) Date de dépôt: **05.04.2024**

(51) Classification Internationale des Brevets (IPC):
*G01M 11/02* *(2006.01)*

(52) Classification Coopérative des Brevets (CPC):
**G01M 11/0264; G01M 11/0228**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **17.04.2023 FR 2303822**

(71) Demandeur: **V-Optics**
**67400 Illkirch-Graffenstaden (FR)**

(72) Inventeurs:
• **CONTRERAS VILLALOBOS, Kevin**
**74160 COLLONGES SOUS SALEVE (FR)**
• **LUCCHESI, Moreno**
**33270 FLOIRAC (FR)**

(74) Mandataire: **Cabinet Nuss**
**10, rue Jacques Kablé**
**67080 Strasbourg Cedex (FR)**

(54) **PROCÉDÉ DE MESURE DE LA PUISSANCE D'UN VERRE OPTIQUE**

(57)  L'invention concerne un système de mesure de la puissance d'un verre (1) optique qui comprend au moins :
- un support de verre (1) optique à étudier,
- un écran (2) de projection au travers du verre (1) optique d'une image correspondant à au moins une succession de franges sinusoïdales alternativement claires et obscures,
- au moins un dispositif de réception (7) associé à un dispositif de mesure positionné de façon à recevoir au moins une partie du faisceau lumineux (3) ayant traversé le verre (1) optique,
- un mécanisme de modification de la position par rapport au verre (1) optique de l'image projetée au travers du verre (1) optique.

[Fig. 1]

Figure 1

**Description**

[La présente invention se rapporte au domaine des dispositifs de mesure de puissance optique d'une lentille et plus particulièrement au domaine des dispositifs de mesure de puissance optique d'un verre en tout point de la lentille.

Dans le cadre d'une production de lentilles optiques et en particulier dans le cadre de lentilles optiques de précision, il est nécessaire sinon indispensable d'être en mesure de vérifier les qualités individuelles de chacune des lentilles produites. Cette vérification est d'autant plus importante pour les lentilles, telles que les verres progressifs, dans lesquelles la puissance diffère entre différents points de la lentille.

Actuellement, les dispositifs utilisés pour déterminer la puissance optique d'une lentille sont des frontofocomètres ou des systèmes Shack-Hartemann qui imposent le positionnement de la lentille vérifiée au niveau de l'axe optique du système. Dans ces systèmes, il est nécessaire de connaître parfaitement la position du verre pour opérer une mesure précise de la puissance de la lentille. Dans le cadre d'une utilisation de frontofocomètres, les mesures étant ponctuelles, il est indispensable que les surfaces mesurées soient positionnées de façon normale par rapport à l'axe de mesure. Lors de mesures au niveau de surfaces plus étendues, notamment dans le cadre de systèmes Shack-Hartemann, celles-ci s'effectuent par approximation et au détriment de la qualité de la précision. Par ailleurs, lorsque le verre présente une surface qui comporte une courbure comme c'est souvent le cas des lentilles optiques, l'inclinaison et le centrage doivent impérativement faire l'objet de mesures préalables à la mesure de la puissance optique sur l'ensemble de la surface du verre.

A l'échelle d'une production industrialisée, une robotisation est recherchée de façon à permettre de réaliser rapidement les opérations de vérification des qualités des lentilles. Cependant, dans le cadre de vérification de la puissance de lentilles sur l'ensemble de leurs surfaces, les appareils de mesure tels que ceux qui existent actuellement imposent soit un positionnement minutieux de la lentille à vérifier, soit un nombre plus important de mesures de façon à caractériser avec précision la géométrie d'au moins l'une des faces de la lentille et sa position spatiale par rapport à l'instrument de mesures dédié. Ces solutions, lorsqu'elles sont susceptibles d'être compatibles avec une automatisation, imposent alors des instruments complémentaires de sorte qu'elles sont souvent complexes et onéreuses, et limitent, sinon ralentissent, la vitesse élevée d'exécution apportée par la robotisation.

La présente invention a pour but de pallier ces inconvénients en proposant une solution technique simplifiée pour opérer une mesure de la puissance optique sur l'ensemble de la surface d'une lentille qui puisse s'affranchir de la caractérisation d'un positionnement minutieux par rapport au système de mesures, tout en permettant une automatisation facilitée.

L'invention concerne un procédé de mesure de la puissance d'un verre optique traversé par au moins un faisceau lumineux provenant d'une image émise par au moins un écran et correspondant à au moins une succession de franges sinusoïdales alternativement claires et obscures, comprenant :

- une étape de première mesure correspondant à la mesure de la position d'un point sur l'image émise par un écran disposé au niveau d'un premier emplacement par rapport au verre optique et dont le faisceau lumineux traverse le verre optique en un point déterminé, la mesure étant effectuée au niveau d'un dispositif de réception de l'image,

- une étape de seconde mesure correspondant à la mesure de la position d'un second point de la même image émise par un écran disposé au niveau d'un second emplacement par rapport au verre optique et dont le faisceau lumineux traverse le verre optique au point déterminé avec le même angle d'incidence que le faisceau lumineux du point émis par l'écran disposé au premier emplacement dans le cadre de la première mesure, la mesure étant effectuée au niveau du dispositif de réception de l'image,

- une étape de détermination de la différence « D » de position entre le verre optique et respectivement, d'une part, la position de l'écran au premier emplacement dans le cadre de la première mesure et, d'autre part, la position de l'écran au second emplacement dans le cadre de la seconde mesure, la différence de position étant déterminée le long d'une perpendiculaire au plan de l'écran passant par le verre optique,

- une étape de détermination de la différence « d » de position sur l'image entre, d'une part, le premier point mesuré de l'image et, d'autre part, le second point mesuré de l'image, dont les faisceaux lumineux traversent le verre optique au point déterminé avec le même angle d'incidence, la différence de position étant déterminée par rapport à un point de référence de l'écran,

- une étape de détermination de l'angle d'incidence « α » des faisceaux lumineux qui traversent le verre optique au point déterminé,

- une étape de détermination de la réfraction opérée par le verre optique au point déterminé traversé par les faisceaux lumineux.

L'invention concerne également un système de mesure de la puissance d'un verre optique apte à mettre en oeuvre un procédé selon l'invention, caractérisé en ce que le système comprend au moins :

- un support de verre optique à étudier,
- un écran de projection au travers du verre optique d'une image correspondant à au moins une succession de franges sinusoïdales alternativement claires et obscures,

- au moins un dispositif de réception associé à un dispositif de mesure positionné de façon à recevoir au moins une partie du faisceau lumineux ayant traversé le verre optique,
- un mécanisme de modification de la position par rapport au verre optique de l'image projetée au travers du verre optique.

L'invention sera mieux comprise, grâce à la description ci-après, qui se rapporte aux modes de réalisation préférés, donnés à titre d'exemples non limitatifs, et expliqués avec référence aux dessins schématiques annexés, dans lesquels :

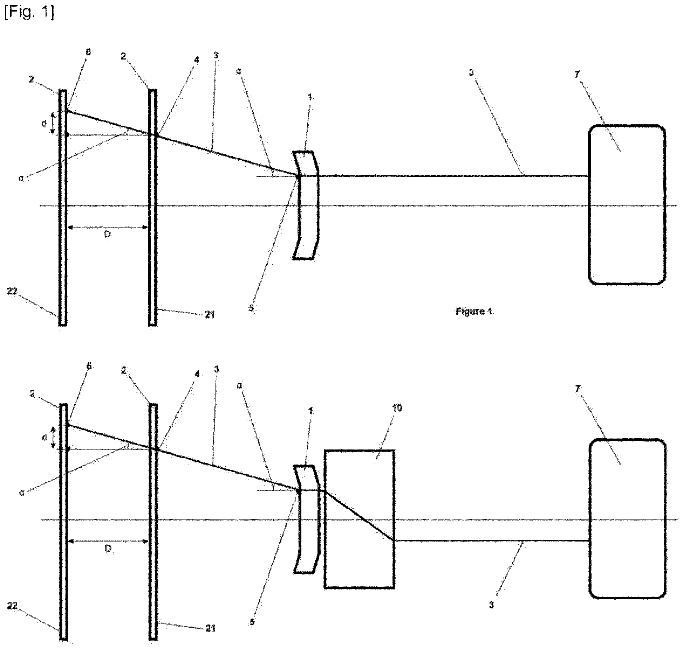

[Fig. 1] est une représentation schématique de deux exemples d'arrangements de différents éléments permettant la mise en oeuvre d'un procédé de mesure de la puissance d'un verre optique selon l'invention.

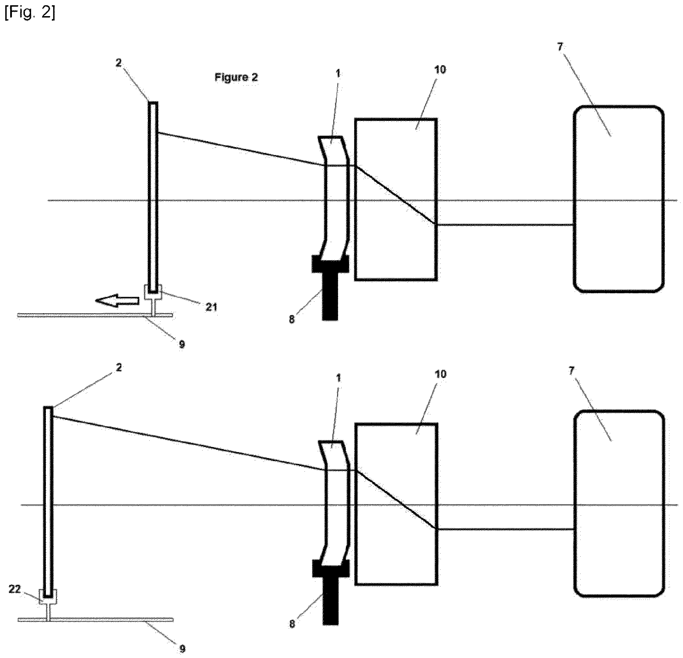

[Fig. 2] est une représentation schématique d'un premier exemple de construction d'un système de mesure de la puissance d'un verre optique selon l'invention.

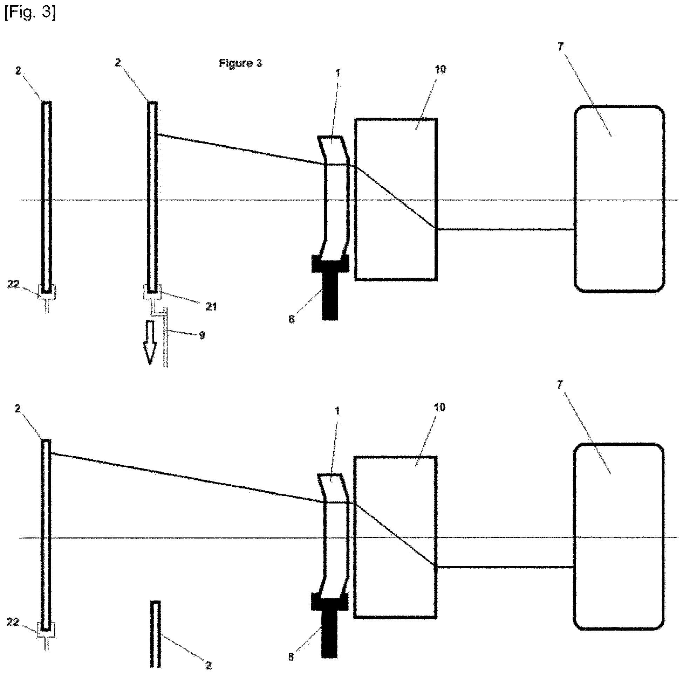

[Fig. 3] est une représentation schématique d'un second exemple de construction d'un système de mesure de la puissance d'un verre optique selon l'invention.

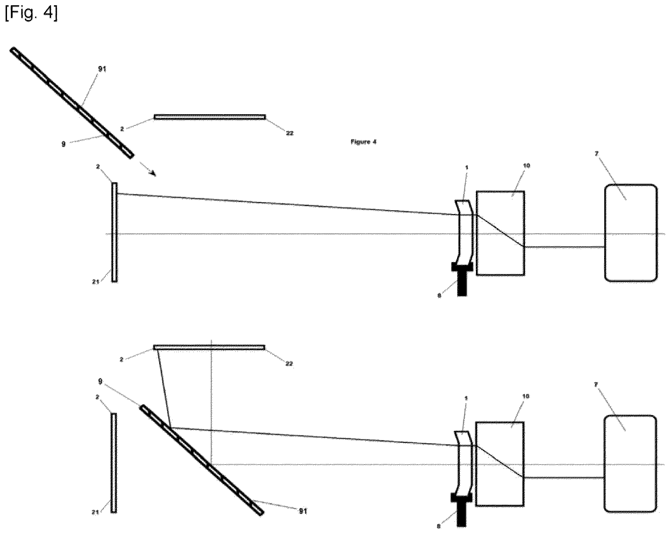

[Fig. 4] est une représentation schématique d'un troisième exemple de construction d'un système de mesure de la puissance d'un verre optique selon l'invention.

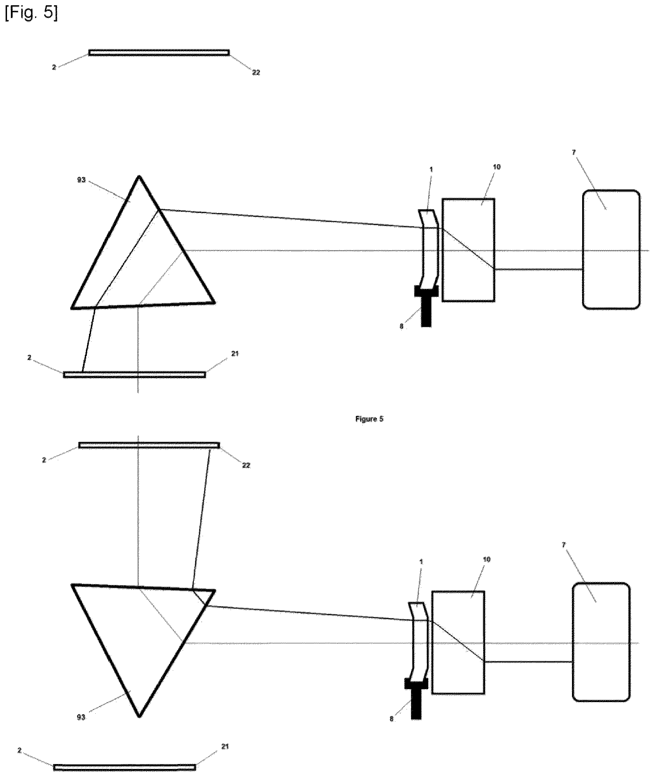

[Fig. 5] est une représentation schématique d'un quatrième exemple de construction d'un système de mesure de la puissance d'un verre optique selon l'invention.

L'invention concerne un procédé de mesure de la puissance d'un verre 1 optique traversé par au moins un faisceau lumineux provenant d'une image émise par au moins un écran 2 et correspondant à au moins une succession de franges sinusoïdales alternativement claires et obscures, comprenant :

- une étape de première mesure correspondant à la mesure de la position d'un point 4 sur l'image émise par un écran 2 disposé au niveau d'un premier emplacement 21 par rapport au verre 1 optique et dont le faisceau lumineux 3 traverse le verre 1 optique en un point 5 déterminé, la mesure étant effectuée au niveau d'un dispositif de réception 7 de l'image,
- une étape de seconde mesure correspondant à la mesure de la position d'un second point 6 de la même image émise par un écran 2 disposé au niveau d'un second emplacement 22 par rapport au verre 1 optique et dont le faisceau lumineux 3 traverse le verre 1 optique au point 5 déterminé avec le même angle $\alpha$ d'incidence que le faisceau lumineux du point 4 émis par l'écran 2 disposé au premier emplacement 21 dans le cadre de la première mesure, la mesure étant effectuée au niveau du dispositif de réception 7 de l'image,

- une étape de détermination de la différence « D » de position entre le verre 1 optique et respectivement, d'une part, la position de l'écran 2 au premier emplacement 21 dans le cadre de la première mesure et, d'autre part, la position de l'écran 2 au second emplacement 22 dans le cadre de la seconde mesure, la différence de position étant déterminée le long d'une perpendiculaire au plan de l'écran 2 passant par le verre 1 optique,
- une étape de détermination de la différence « d » de position sur l'image entre, d'une part, le premier point 4 mesuré de l'image et, d'autre part, le second point 6 mesuré de l'image, dont les faisceaux lumineux 3 traversent le verre 1 optique au point 5 déterminé avec le même angle $\alpha$ d'incidence, la différence de position étant déterminée par rapport à un point de référence de l'écran 2,
- une étape de détermination de l'angle d'incidence « $\alpha$ » des faisceaux lumineux 3 qui traversent le verre 1 optique au point 5 déterminé,
- une étape de détermination de la réfraction opérée par le verre 1 optique au point 5 déterminé traversé par les faisceaux lumineux 3.

Grâce au procédé de l'invention, la caractérisation de l'angle $\alpha$ d'incidence en un point 5 déterminé du verre 1 optique s'affranchit de la position du verre 1 optique par rapport à la source des faisceaux lumineux 3 réalisée par le positionnement d'un écran 2 au niveau de deux emplacements 21, 22 différents. En effet, la distance formée par la différence « D » des emplacements d'écran 21, 22 est une valeur indépendante de la position du verre 1 optique étudié par rapport à la source des faisceaux lumineux 3 et donc de la position de la surface du verre 1 optique, notamment lorsque cette surface du verre 1 optique présente une variation telle qu'une inclinaison et/ou une courbure. Aussi, le besoin d'une caractérisation minutieuse préalable de la position du verre 1 optique se trouve écartée pour déterminer l'angle d'incidence « $\alpha$ ».

Par ailleurs, il convient également de relever que, dès lors que les faisceaux lumineux 3 provenant de l'écran 2 de chacun des deux emplacements 21, 22 traversent l'ensemble de la surface du verre 1 optique analysé, la différence « D » des emplacements d'écran 2 autorise une identification de l'angle d'incidence $\alpha$ en tout point 5 déterminé de la surface du verre 1 optique sans connaître ni la géométrie de la surface de ce verre 1 optique ni le positionnement de l'un ou l'autre des points 5 de cette surface du verre 1.

La caractérisation de l'angle d'incidence $\alpha$ des faisceaux lumineux 3 au point 5 déterminé de la surface du verre 1 optique permet alors, par comparaison avec l'angle de réfraction des faisceaux lumineux 3 entre le verre 1 optique et le dispositif de réception 7 selon un axe parallèle à l'axe optique, de déterminer la réfraction en ce point 5 du verre 1. A partir de la réfraction du verre en un point 5, et éventuellement de mesures de la réfraction du verre 1 au sein d'un intervalle de points proches entourant le point 5 considéré du verre 1 associées à une caractérisation de l'équation de la variation de ces mesures, la puissance au point 5 considéré du verre 1 est déterminable sans difficulté, de même que la focale.

Dans le cadre de l'analyse d'un verre 1 unifocal, le positionnement d'au moins une partie du verre au niveau de l'axe optique entre l'écran 21, 22 de chacun des deux emplacements et le dispositif de réception 7 permet de caractériser la puissance du verre 1 en ce point 5. Par ailleurs, la forme géométrique d'un verre 1 unifocal étant connue et constante, la caractérisation de la puissance en un point 5 du verre 1 suffit pour caractériser la puissance du verre 1 en chacun des points.

Dans le cadre de l'analyse d'un verre 1 multifocal, le procédé selon l'invention fait intervenir un mécanisme de télécentricité 10 positionné entre le verre 1 optique à analyser et le dispositif de réception 7. Ce mécanisme de télécentricité 10 permet une distribution des différents faisceaux lumineux 3 ayant traversé le verre 1 optique vers le dispositif de réception 7 selon un arrangement parallèle à l'axe optique entre l'écran 21, 22 de chacun des deux emplacements et le dispositif de réception 7. Aussi, par approximation de la courbure du verre 1 au niveau de sa surface réfractée de sorte que cette surface du verre 1 soit assimilée à une surface plane, la caractérisation de la réfraction, la focale et la puissance en chacun des points 5 du verre 1 sont susceptibles d'être réalisées. Le mécanisme de télécentricité 10 permet ainsi d'opérer une orientation du faisceau lumineux 3 réfracté par le verre 1 selon un axe parallèle à l'axe optique de sorte que la caractérisation par le dispositif de réception 7 de la position du faisceau lumineux 3 réfracté par le verre 1 est en mesure de s'affranchir d'une éventuelle variation de l'épaisseur du verre 1 multifocal, notamment lorsque cette variation de l'épaisseur est liée à la différence de courbure entre les deux surfaces du verre 1.

Selon un exemple se rapportant à une variante de mise en oeuvre préférée du procédé de mesure de puissance de l'invention, l'étape de détermination de l'angle d'incidence « α » au point 5 déterminé du verre 1 optique fait intervenir l'équation :

$$\alpha = Arctan\ (d/D)$$

Selon cette variante de mise en oeuvre, l'angle d'incidence « α » des faisceaux lumineux 3 dans le verre 1 par rapport à l'angle des faisceaux lumineux 3 ayant traversé le verre 1 et orientés selon un axe parallèle à l'axe optique est en mesure d'être caractérisé sans difficulté. La mise en oeuvre de l'équation est préférentiellement réalisée par un dispositif de calcul dédié, par exemple associé à un dispositif de mesure ou au dispositif de réception 7.

Selon un exemple se rapportant à une autre variante de mise en oeuvre du procédé de mesure de puissance de l'invention susceptible d'être combinée avec l'une des variantes précédemment détaillées, le procédé fait intervenir un seul écran 2, successivement disposé au niveau d'un premier emplacement 21 puis d'un second emplacement 22 par rapport au verre 1, et comprend, entre les deux étapes de mesure, une étape de translation de l'écran 2 depuis le premier emplacement 21 vers le second emplacement 22. Dans le cadre de cette variante de mise en oeuvre du procédé, l'écran 2 est translaté le long d'une distance qui correspond à la différence « D » de position entre le verre 1 optique et chacun des deux emplacements 21, 22 de l'écran 2, notamment le long d'une perpendiculaire au plan de l'écran 2 passant par le verre 1 optique.

Selon un exemple se rapportant à une autre variante de mise en oeuvre du procédé de mesure de puissance de l'invention susceptible d'être combinée avec certaines des variantes précédemment détaillées, le procédé comprend, entre les deux étapes de mesure, une étape de déviation du faisceau lumineux 3 qui traverse un point déterminé 5 du verre 1 optique et émis par l'écran 2 disposé au niveau du premier emplacement 21 de façon à permettre la projection du faisceau lumineux 3 émis par l'écran 2 disposé au second emplacement 22 pour traverser le verre 1 optique au point déterminé 5 selon un angle d'incidence « α » identique. Selon cette variante de construction, chacun des deux écrans 2 demeure en position au niveau de leurs emplacements 21, 22 respectifs. En revanche, les faisceaux lumineux 3 émis par chacun de ces écrans 2 sont projetés alternativement au travers du verre 1 optique à analyser. A titre d'exemple, la projection d'au moins un faisceau lumineux 3 de chacun des écrans 3 au travers du verre 1 optique fait intervenir au moins un mécanisme de réflexion réalisé par l'intermédiaire d'un ou de plusieurs moyens de réflexion tels que des miroirs, voire éventuellement par l'intermédiaire d'un prisme, et positionné le long de la course du au moins un faisceau lumineux 3. Le déplacement d'une partie du mécanisme de réflexion, par exemple par pivotement d'un moyen de réflexion permet la sélection d'au moins un faisceau lumineux 3 en provenance de l'un des deux écrans 2 au détriment de l'autre. Le mécanisme de réflexion 91 intervient ainsi comme un mécanisme de sélection 9 du au moins un faisceau lumineux 3 projeté au travers du verre 1 optique.

Selon un exemple se rapportant à une autre variante de mise en oeuvre du procédé de mesure de puissance de l'invention susceptible d'être combinée avec certaines des variantes précédemment détaillées, le procédé comprend des étapes de première et seconde mesures de la position de chacun des points 4, 6 de l'image émise par l'écran 2 respectivement disposés au niveau du premier emplacement 21 et du second emplacement 22 et qui traversent le verre optique 1 en des points 5 déterminés respectifs. A titre d'exemple de mise en oeuvre, l'image émise, d'une part, par l'écran 2 au premier emplacement 21 et, d'autre part, par l'écran 2 au second emplacement 22 associe une paire de coordonnées pour chacun des points 4, 6 ou pixels de l'image. Le dispositif de réception 7 de l'image associe également une paire de coordonnées pour chacun des points ou pixels de l'image réceptionnée et réalisé par chaque faisceau lumineux 3 ayant traversé le verre 1 optique en un point déterminé 5. L'image émise par l'écran 2 correspond à une succession de franges sinusoïdales alternativement claires et obscures. La variation sinusoïdale des franges est susceptible d'être réalisée le long d'un axe unique ou, alternativement, le long de deux axes sécants, par exemple perpendiculaires entre eux, de sorte que l'image présente une distribution de franges correspondant à des variations sinusoïdales alternatives claires et obscures, selon deux axes. Une variation sinusoïdale de franges selon un axe unique permet l'identification de coordonnées par rapport à ce seul axe de variations des franges. A l'inverse, une variation sinusoïdale de franges selon deux axes sécants permet une caractérisation de coordonnées par rapport à chaque axe de variations et donc dans l'ensemble du plan de l'image. Aussi, compte tenu des particularités de l'image projetée, pour chaque point de coordonnées déterminées de l'image réceptionnée et ayant traversé le verre 1 optique en un point déterminé 5, il est possible d'associer un point de coordonnées déterminées de l'image émise par l'écran 2 positionné au niveau de chacun des emplacements 21, 22. Les correspondances identifiées entre les points de chacune des images permettent ainsi la caractérisation de la différence « d » de position sur l'image entre, d'une part, le premier point 4 mesuré de l'image et, d'autre part, le second point 6 mesuré de l'image, dont les faisceaux lumineux 3 traversent le verre 1 optique au point 5 déterminé avec le même angle « α » d'incidence.

Selon un exemple se rapportant à une autre variante de mise en oeuvre du procédé de mesure de puissance de l'invention susceptible d'être combinée avec certaines des variantes précédemment détaillées, l'image émise par chacun des écrans 2 comprend des franges identiques. Selon cette variante de mise en oeuvre, les franges sinusoïdales alternativement claires et obscures présentent des arrangements rectilignes et sont parallèles entre elles. Ces franges présentent également un arrangement sinusoïdal dont la longueur d'onde est constante le long de l'axe perpendiculaire à ces franges. De façon complémentaire, la variation sinusoïdale des franges est susceptible d'être réalisée le long de deux axes sécants, par exemple perpendiculaires entre eux, de sorte que l'image présente une distribution de franges correspondant à des variations sinusoïdales alternatives claires et obscures, selon deux axes. Le long de chacun des axes respectifs, les franges présentent un arrangement sinusoïdal de longueurs d'onde respectives constantes.

L'invention porte également sur un système de mesure de la puissance d'un verre 1 optique apte à mettre en oeuvre un procédé selon l'invention, caractérisé en ce que le système comprend au moins :

- un support 8 de verre 1 optique à étudier,
- un écran 2 de projection au travers du verre 1 optique d'une image correspondant à au moins une succession de franges sinusoïdales alternativement claires et obscures,
- au moins un dispositif de réception 7 associé à un dispositif de mesure 11 positionné de façon à recevoir au moins une partie du faisceau lumineux 3 ayant traversé le verre 1 optique,
- un mécanisme de modification 9 de la position par rapport au verre 1 optique de l'image projetée au travers du verre 1 optique.

Le système selon l'invention positionne ainsi un écran 2 au niveau d'au moins un premier emplacement 21 par rapport au verre 1 optique de façon à projeter un faisceau lumineux 3 au travers du verre 1 optique, de sorte qu'au moins une partie du faisceau lumineux 3 soit réceptionnée par le dispositif de réception 7. Le dispositif de mesure 11 associé au dispositif de réception 7 permet de déterminer le point 4, 6 de l'image projetée par l'écran 2 au niveau du dispositif de réception 7 au travers d'un point 5 déterminé du verre 1 optique.

Selon un exemple se rapportant à une variante de construction du système de l'invention, celui-ci comprend également un mécanisme de télécentricité 10 positionné entre le support 8 de verre 1 optique et le dispositif de réception 7. Ce mécanisme de télécentricité 10 est susceptible de prendre la forme d'une association de deux lentilles montées dans des plans parallèles entre eux et séparées d'une distance correspondant à la somme de leurs focales respectives. A titre complémentaire, ce mécanisme de télécentricité 10 est susceptible d'intégrer un diaphragme positionné entre les deux lentilles du mécanisme, au niveau du point où les points focaux respectifs des deux lentilles sont confondus. De façon préférée, le mécanisme de télécentricité 10 fait intervenir un objectif télécentrique. De façon à obtenir une orientation parallèlement entre eux des faisceaux 3 ayant traversé le verre 1 optique analysé selon une distribution correspondant aux positions respectives des faisceaux 3 en sortie du verre 1 optique, le mécanisme de télécentricité 10 est positionné au plus près de la surface du verre 1 optique, idéalement contre la surface du verre 1. En limitant, voire en supprimant, la distance de course entre le verre 1 optique et le mécanisme de télécentricité 10, les positions des faisceaux 3 lumineux entre eux au niveau du dispositif de réception 7 sont similaires, voire identiques, à celles en sortie du verre 1 optique au niveau de la surface du verre 1. Dans ces conditions, le dispositif de réception 7, en combinaison avec le dispositif de mesure 11, est susceptible de caractériser précisément la correspondance entre un point 5 du verre 1 optique traversé par un faisceau lumineux 3 et le point 4, 6 de l'image de l'écran 2 de projection.

Le mécanisme de modification 9 de la position de l'image projetée au travers du verre 1 optique est susceptible d'adopter différentes configurations en fonction de la variante de construction du système.

Selon un exemple se rapportant à une variante de construction du système de l'invention susceptible d'être combinée avec certaines des variantes précédemment détaillées, le mécanisme de modification 9 de la position de l'image projetée comprend un mécanisme de déplacement de l'écran 2 de projection entre, d'une part, un premier emplacement 21 rapproché du support 8 du verre 1 optique à étudier et, d'autre part, un second emplacement 22 éloigné du support 8 de verre 1 optique à étudier. Selon un exemple préféré de construction, l'écran 2, le verre 1 optique avec son support 8 et le dispositif de réception 7 sont alignés et l'écran 2 est monté mobile en translation selon un axe parallèle à cet axe d'alignement de l'écran 2, du verre 1 optique analysé et du dispositif de réception 7. Cet axe d'alignement correspond sensiblement à l'axe de course des faisceaux lumineux 3 depuis l'écran 2 de projection vers le dispositif de réception 7. L'écran 2 de projection est alors idéalement disposé dans un plan sensiblement perpendiculaire à cet axe d'alignement. Selon un exemple alternatif de construction permettant de limiter l'encombrement du système de mesure de l'invention, le système comprend un ou plusieurs réflecteurs disposés le long de la course des faisceaux lumineux 3 depuis l'écran 2 de projection vers le dispositif de réception 7 de sorte que le parcours des faisceaux lumineux 3 peut être intégré à l'intérieur d'un volume de longueur plus restreinte qu'un alignement des différents éléments du système.

Selon un exemple se rapportant à une variante de construction du système de l'invention susceptible d'être combinée avec certaines des variantes précédemment détaillées, le système comprend deux écrans 2 de projection disposés à des emplacements 21, 22 respectifs de sorte que les longueurs de course des images respectives projetées jusqu'au verre 1 optique soient différentes. Les deux écrans 2 et le verre 1 optique sont alors alignés sur la course des faisceaux lumineux 3 projetés au travers du verre 1 optique. L'écran 2 positionné à l'emplacement 21 dont la course des faisceaux lumineux 3 projeté est la plus courte est alors monté mobile entre deux positions, sous l'action du mécanisme de modification 9 de la position de l'image projetée. Une première position est définie de sorte que, d'une part, l'image de l'écran 2 est projetée au travers du verre 1 optique et, d'autre part, l'écran 2 fait obstacle au faisceau lumineux émis par le second écran de façon à empêcher la projection de l'image du faisceau 3 du second écran au travers du verre 1 optique. Une seconde position est définie de sorte que l'écran 2 est écarté de l'axe de projection de l'image du faisceau 3 lumineux vers le verre 1 optique, par exemple par translation selon un axe perpendiculaire à l'axe de projection de l'image du faisceau 3 lumineux vers le verre 1 optique. Dans cette seconde position, d'une part, l'image projetée par l'écran 2 déplacé n'est plus en mesure d'atteindre le verre 1 optique et, d'autre part, l'écran 2 ne fait plus obstacle au faisceau 3 lumineux émis par le second écran pour qu'ils traversent le verre 1 optique.

Selon un exemple se rapportant à une variante de construction du système de l'invention susceptible d'être combinée avec certaines des variantes précédemment détaillées, le système comprend :

- deux écrans 2 de projection disposés à des emplacements 21, 22 respectifs de sorte que les longueurs de course des images respectives projetées jusqu'au verre 1 optique soient différentes,
- un mécanisme de sélection 9 de l'image projetée au travers du verre 1 optique émise par l'un ou l'autre des deux écrans 2 de projection, le mécanisme 8 comprenant au moins un moyen de réflexion 91 déplaçable de façon à être, d'une part, positionné sur la course de l'image projetée par chacun des écrans 2 et, d'autre part, apte à obturer la course du faisceau lumineux 3 projeté par un premier des deux écrans 3 tout en déviant la course du faisceau lumineux 3 projeté par le second écran 2 de mesure en direction du verre 1 optique.

Selon cette variante de construction, le mécanisme de modification 9 de la position de l'image projetée fait intervenir un mécanisme de sélection de l'image projetée qui prend la forme d'un moyen de réflexion 91 tel qu'un miroir, monté déplaçable en travers de l'axe de la course du faisceau lumineux 3 projeté au travers du verre 1 optique. Le moyen de réflexion 91 est ainsi déplacé entre, d'une part, une première position permettant la projection lumineuse provenant uniquement de l'écran 2 situé au premier emplacement 21 vers le verre 1 optique et, d'autre part, une seconde position permettant la projection lumineuse provenant uniquement de l'écran 2 situé au second emplacement 21 vers le verre 1 optique. A titre d'exemple de construction, le moyen de réflexion 91 du mécanisme de sélection 9 est sensiblement positionné, d'une part, entre un premier écran 2 situé au premier emplacement 21 et le verre 1 optique et, d'autre part, au niveau de l'intersection des axes de projection lumineuse de chacun des deux écrans 2. Ce moyen de réflexion 91 est ainsi susceptible d'être déplaçable en translation dans un plan qui, d'une part, est sécant avec l'axe de projection lumineuse du premier écran 2 situé au premier emplacement 21 vers le verre 1 optique et, d'autre part, présente une inclinaison avec un plan sensiblement perpendiculaire à l'axe de la projection lumineuse depuis l'écran 2 situé au premier emplacement 21 vers le verre 1 optique. Cette translation est ainsi réalisée de sorte que, selon une première position, le moyen de réflexion 91 ne gêne pas la course de la projection lumineuse depuis l'écran 2 situé au premier emplacement 21 vers le verre 1 optique, sans réflexion de la projection lumineuse de l'écran 2 situé au second emplacement 21 vers le verre 1 optique et que, selon une seconde position, le moyen de réflexion 91 se positionne en travers de la course de la projection lumineuse de l'écran 2 situé au premier emplacement 21 et réfléchisse vers le verre 1 optique la projection lumineuse de l'écran 2 situé au second emplacement 21. Selon un exemple se rapportant à une construction alternative, le moyen de réflexion 91 est arrangé pour être déplaçable par pivotement autour d'un axe disposé dans un plan sensiblement perpendiculaire à l'axe de la projection lumineuse depuis l'écran 2 situé au premier emplacement 21 vers le verre 1 optique. Là aussi, selon une première position, le moyen de réflexion 91 ne gêne pas la course de la projection lumineuse depuis l'écran 2 situé au premier emplacement 21 vers le verre 1 optique et ne réfléchit pas la projection lumineuse de l'écran 2 situé au second emplacement 21 vers le verre 1 optique. De même, selon une seconde position, le moyen de réflexion 91 se positionne en travers de la course de la projection lumineuse de l'écran 2 situé au premier emplacement 21 et réfléchit vers le verre 1 optique la projection lumineuse de l'écran 2 situé au second emplacement 21. Ainsi, le déplacement d'une partie du mécanisme de réflexion, par exemple par pivotement d'un moyen de réflexion 91 permet la sélection d'au moins un faisceau lumineux 3 en provenance de l'un des deux écrans 2 au détriment de l'autre. Le mécanisme de réflexion intervient ainsi comme un mécanisme de sélection 9 du au moins un faisceau lumineux 3 projeté au travers du verre 1 optique en sélectionnant l'origine de l'image projetée parmi les écrans 2 positionnés au niveau de deux emplacements 21, 22 distincts.

Selon un exemple se rapportant à une variante de construction du système de l'invention susceptible d'être combinée avec certaines des variantes précédemment détaillées, le système comprend :

- deux écrans 2 de projection disposés à des emplacements 21, 22 respectifs de sorte que les longueurs de course des images respectives projetées jusqu'au verre 1 optique soient différentes,
- un mécanisme de sélection 9 de l'image projetée au travers du verre 1 optique émise par l'un ou l'autre des deux écrans 2 de projection, le mécanisme 8 comprenant au moins un prisme 92 de déviation, d'une part, positionné sur la course de l'image projetée par chacun des écrans 2 et, d'autre part, apte à modifier en direction du verre 1 optique la course du faisceau lumineux 3 projeté par un premier des deux écrans 2 au détriment du faisceau lumineux 3 projeté par le second des deux écrans 2.

Selon cette variante de construction, le mécanisme de modification 9 de la position de l'image projetée fait intervenir un mécanisme de sélection 9 de l'image projetée qui prend la forme d'un prisme 92 de déviation monté déplaçable en travers de l'axe de la course de faisceaux lumineux 3 projetés au travers du verre 1 optique. Le prisme 92 de déviation est ainsi déplacé entre, d'une part, une première position permettant la déviation vers le verre 1 optique des faisceaux lumineux 3 provenant uniquement de l'écran 2 situé au premier emplacement 21 et, d'autre part, une seconde position permettant la déviation vers le verre 1 optique des faisceaux lumineux 3 provenant uniquement de l'écran 2 situé au second emplacement 21. A titre d'exemple de construction, le prisme 92 de déviation du mécanisme de sélection 9 est positionné au niveau de l'intersection des axes de projection lumineuse de chacun des deux écrans 2. Selon un exemple se rapportant à une construction alternative, le prisme 92 de déviation est arrangé pour être déplaçable par pivotement autour d'un axe perpendiculaire aux axes de projection lumineuse de chacun des deux écrans 2. Le prisme 92 de déviation est monté pivotant entre au moins deux positions. Selon une première position, le prisme 92 de déviation dirige vers le verre 1 optique la projection lumineuse de l'écran 2 situé au premier emplacement 21, tout en empêchant une projection lumineuse de l'écran 2 situé au second emplacement 21 vers le verre 1 optique. Selon une seconde position, le prisme 92 de déviation dirige vers le verre 1 optique la projection lumineuse de l'écran 2 situé au second emplacement 22, tout en empêchant une projection lumineuse de l'écran 2 situé au premier emplacement 21 vers le verre 1 optique. Ainsi, le prisme 92 de déviation intervient comme un mécanisme de sélection 9 du au moins un faisceau lumineux 3 projeté au travers du verre 1 optique en sélectionnant l'origine de l'image projetée parmi les écrans 2 positionnés au niveau de deux emplacements 21, 22 distincts. Selon un exemple de construction complémentaire, une surface du prisme 92 de déviation présente une surface de réflexion. Lorsque le prisme 92 de déviation opère une déviation en direction du verre 1 optique du au moins un faisceau lumineux 3 provenant d'un premier des deux écrans 2, cette surface de réflexion est arrangée pour écarter du verre 1 optique la projection lumineuse provenant du second des deux écrans 2 et ainsi éviter toute altération du faisceau lumineux 3 traversant le verre 1 optique à analyser.

Il convient de relever que, dans le présent document, l'axe de projection lumineuse d'un écran 2 correspond sensiblement à la perpendiculaire à la surface de cet écran.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de mesure de la puissance d'un verre (1) optique traversé par au moins un faisceau lumineux provenant d'une image émise par au moins un écran (2) et correspondant à au moins une succession de franges sinusoïdales alternativement claires et obscures, comprenant :

    - une étape de première mesure correspondant à la mesure de la position d'un point (4) sur l'image émise par un écran (2) disposé au niveau d'un premier emplacement (21) par rapport au verre (1) optique et dont le faisceau lumineux (3) traverse le verre (1) optique en un point (5) déterminé, la mesure étant effectuée au niveau d'un dispositif de réception (7) de l'image,
- une étape de seconde mesure correspondant à la mesure de la position d'un second point (6) de la même image émise par un écran (2) disposé au niveau d'un second emplacement (22) par rapport au verre (1) optique et dont le faisceau lumineux (3) traverse le verre (1) optique au point (5) déterminé avec le même angle (α) d'incidence que le faisceau lumineux du point (4) émis par l'écran (2) disposé au premier emplacement (21) dans le cadre de la première mesure, la mesure étant effectuée au niveau du dispositif de réception (7) de l'image,
- une étape de détermination de la différence « D » de position entre le verre (1) optique et respectivement, d'une part, la position de l'écran (2) au premier emplacement (21) dans le cadre de la première mesure et, d'autre part, la position de l'écran (2) au second emplacement (22) dans le cadre de la seconde mesure, la différence de position étant déterminée le long d'une perpendiculaire au plan de l'écran (2) passant par le verre (1) optique,
- une étape de détermination de la différence « d » de position sur l'image entre, d'une part, le premier point (4) mesuré de l'image et, d'autre part, le second point (6) mesuré de l'image, dont les faisceaux lumineux (3) traversent le verre (1) optique au point déterminé (5) avec le même angle (α) d'incidence, la différence de position étant déterminée par rapport à un point de référence de l'écran (2),
- une étape de détermination de l'angle d'incidence « α » des faisceaux lumineux (3) qui traversent le verre (1) optique au point (5) déterminé,
- une étape de détermination de la réfraction opérée par le verre (1) optique au point (5) déterminé traversé par les faisceaux lumineux (3).

2. Procédé de mesure de puissance selon la revendication 1, **caractérisé en ce que** l'étape de détermination de l'angle d'incidence « α » au point (5) déterminé du verre (1) optique fait intervenir l'équation :

$$\alpha = Arctan\ (d/D)$$

3. Procédé de mesure de puissance selon une des revendications 1 ou 2, **caractérisé en ce que** le procédé fait intervenir un seul écran (2), successivement disposé au niveau d'un premier emplacement (21) puis d'un second emplacement (22) par rapport au verre (1), et comprend, entre les deux étapes de mesure, une étape de translation de l'écran (2) depuis le premier emplacement (21) vers le second emplacement (22).

4. Procédé de mesure de puissance selon une des revendications 1 ou 2, **caractérisé en ce que** le procédé comprend, entre les deux étapes de mesure, une étape de déviation du faisceau lumineux (3) qui traverse un point déterminé (5) du verre (1) optique et émis par l'écran (2) disposé au niveau du premier emplacement (21) de façon à permettre la projection du faisceau lumineux (3) émis par l'écran (2) disposé au second emplacement (22) pour traverser le verre (1) optique au point déterminé (5) selon un angle d'incidence « α » identique.

5. Procédé de mesure de puissance selon une des revendications précédentes, **caractérisé en ce que** le procédé comprend des étapes de première et seconde mesures de la position de chacun des points de l'image émise par l'écran respectivement disposés au niveau du premier et du second emplacement et qui traversent le verre optique en des points déterminés respectifs.

6. Système de mesure de la puissance d'un verre (1) optique apte à mettre en oeuvre un procédé selon une des revendications 1 à 5, **caractérisé en ce que** le système comprend au moins :

    - un support (8) de verre (1) optique à étudier,
    - un écran (2) de projection au travers du verre (1) optique d'une image correspondant à au moins une succession de franges sinusoïdales alternativement claires et obscures,
    - au moins un dispositif de réception (7) associé à un dispositif de mesure positionné de façon à recevoir au moins une partie du faisceau lumineux (3) ayant traversé le verre (1) optique,
    - un mécanisme de modification de la position par rapport au verre (1) optique de l'image projetée au travers du verre (1) optique.

7. Système de mesure selon la revendication 6, **caractérisé en ce que** le système comprend également un mécanisme de télécentricité (10) positionné entre le support (8) de verre (1) optique et le dispositif de réception (7).

8. Système de mesure selon une des revendications 6 ou 7, **caractérisé en ce que** le mécanisme de modification (9) de la position de l'image projetée comprend un mécanisme de déplacement de l'écran (2) de projection entre, d'une part, un premier emplacement (21) rapproché du support (8) du verre (1) optique à étudier et, d'autre part, un second emplacement (22) éloigné du support (8) de verre (1) optique à étudier.

9. Système de mesure selon une des revendications 6 ou 7, **caractérisé en ce que** le système comprend :

- deux écrans (2) de projection disposés à des emplacements (21, 22) respectifs de sorte que les longueurs de course des images respectives projetées jusqu'au verre (1) optique soient différentes,
- un mécanisme de sélection (9) de l'image projetée au travers du verre (1) optique émise par l'un ou l'autre des deux écrans (2) de projection, le mécanisme (8) comprenant au moins un moyen de réflexion (91) déplaçable de façon à être, d'une part, positionné sur la course de l'image projetée par chacun des écrans (2) et, d'autre part, apte à obturer la course du faisceau lumineux (3) projeté par un premier des deux écrans (3) tout en déviant la course du faisceau lumineux (3) projeté par le second écran (2) de mesure en direction du verre (1) optique.

10. Système de mesure selon la revendication 6, **caractérisé en ce que** le système comprend :

- deux écrans (2) de projection disposés à des emplacements (21, 22) respectifs de sorte que les longueurs de course des images respectives projetées jusqu'au verre (1) optique soient différentes,
- un mécanisme de sélection (9) de l'image projetée au travers du verre (1) optique émise par l'un ou l'autre des deux écrans (2) de projection, le mécanisme (8) comprenant au moins un prisme (92) de déviation, d'une part, positionné sur la course de l'image projetée par chacun des écrans (2) et, d'autre part, apte à modifier en direction du verre (1) optique la course du faisceau lumineux (3) projeté par un premier des deux écrans (2) au détriment du faisceau lumineux (3) projeté par le second des deux écrans (2).

[Fig. 1]

Figure 1

[Fig. 2]

Figure 2

[Fig. 3]

Figure 3

[Fig. 4]

Figure 4

[Fig. 5]

Figure 5

# EP 4 450 944 A1

Europäisches
Patentamt

European
Patent Office

Office européen
des brevets

## RAPPORT DE RECHERCHE EUROPEENNE

Numéro de la demande

EP 24 16 8747

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2016/141333 A1 (EYENETRA INC [US]) 9 septembre 2016 (2016-09-09) * alinéa [0028] - alinéa [0045]; figure 1 * | 1-10 | INV. G01M11/02 |
| | - - - - - | | |
| A | US 2011/134438 A1 (KATO SEIMA [JP]) 9 juin 2011 (2011-06-09) * alinéa [0279] - alinéa [0305]; figure 8 * | 1-10 | |
| | - - - - - | | |

**DOMAINES TECHNIQUES RECHERCHES (IPC)**

G01M

Le présent rapport a été établi pour toutes les revendications

| Lieu de la recherche | Date d'achèvement de la recherche | Examinateur |
|---|---|---|
| La Haye | 4 juillet 2024 | Amroun, Sébastien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

15

# EP 4 450 944 A1

| Document brevet cité au rapport de recherche | Date de publication | Membre(s) de la famille de brevet(s) | Date de publication |
|---|---|---|---|
| WO 2016141333 A1 | 09-09-2016 | US 2018038768 A1 | 08-02-2018 |
| | | WO 2016141333 A1 | 09-09-2016 |
| US 2011134438 A1 | 09-06-2011 | JP 4968966 B2 | 04-07-2012 |
| | | JP 2011117897 A | 16-06-2011 |
| | | US 2011134438 A1 | 09-06-2011 |

EPO FORM P0460